# EUROPEAN PATENT APPLICATION

(11) **EP 4 790 686 A1**
(43) Date of publication of application: **12.08.2026**
(21) Application number: 25156264.1
(22) Date of filing: 06.02.2025
(51) Int. Cl.: G09B 23/28, A62B 9/00, A63B 23/18

(54) **AN ASSEMBLY OF DEVICES FOR TRAINING THE BREATHING TECHNIQUE WITH PERSONAL BREATHING APPARATUSES**

(71) Applicant: LifeBreeze Oy, 55800 Imatra (FI)
(72) Inventor:
(74) Representative: Jeck, Jonathan

(57) **Abstract**

The invention is to create an assembly of devices consisting of a RPE simulator that looks identically to RPE and simulates the breathing mixture temperature, as well as comprises replaceable components through which a trainee inhales and exhales, as a single block.

Heating of a breathing mixture allows simulating the temperature when breathing in RPE, while the replaceable facepiece, breathing bag, heating element and flow sensor housing will allow avoiding the need to disinfect the simulator before it is used by the next trainee.

The technical problem the present invention solves is to expand the range of technical means for training breathing skills in closed-loop respiratory protective equipment that allows a trainee to feel the heated inhaled air, breathing resistance, increased concentration of CO2, and also to monitor the training process and the consumption of the estimated operating time.

The present invention is an assembly of devices including a support harness, a simulator looking identically to the RPE consisting of a facepiece, a breathing bag with breathing bag pipes, a thermoelement, a flow sensor housing, a flowmeter, a nozzle for resistance simulation, a filter, a simulating body that comprises a flowmeter converter, an inertial sensor, a ballast weight, an on/off switch, a power unit, a measurement unit including a microcontroller that controls, collects, calculates and transmits data, a flowmeter, a thermoelement, a heart rate monitor, an inertial sensor with an option to transmit processed data via a radio-wave transmitter, a data synchronization unit, a wireless data transmission unit, and a wearable device including a microcontroller with a heart rate monitor, a wireless transmission unit, a synchronization unit, a display and a power component, with an option to display the training process and remaining operating time and to generate training protocols.

Whereas:
- The facepiece, breathing bag comprising the nozzle, thermoelement, and the flow sensor housing are connected as a single unit, which is attached to the filter using a quick-release technique to allow replacement with a new replaceable unit of the facepiece with the breathing bag and filter.
- The thermoelement found in the breathing bag is connected to the simulating body by means of mating terminal connections mounted on the flow sensor housing and simulating body.

This invention may be implemented as a version where the flowmeter is designed as a Venturi tube, with nozzles on flowmeter housing 5 for pressure measurement and proper holes of the simulating body for pressure measurement with the flowmeter and flowmeter converter located in the simulating body.

The simulating body may be additionally equipped with the data presenting unit that includes a screen and/or a speaker or a vibration unit with a controller to display signals corresponding to the symbols of the remaining operating time of RPE and the amount remaining till the end of the estimated operating time of RPE and/or vibration-emitting unit. The data presenting unit may be a supplementing unit to this system connected to the simulating system or be located on the simulating body.

## Description

### Field of the invention.

This invention is intended for a man to acquire and train a breathing skill with a closed-loop respiratory protective equipment.

### Background of the invention

In a closed-loop respiratory protective equipment, the exhaled air is filtered, cleaned from carbon dioxide, enriched with oxygen and is then re-used for breathing. Such respiratory protective equipment are used when the work is to be carried out in the irrespirable outer atmosphere and when there is a risk of oxygen concentration drop below 17%, that is during fire, mine rescue operations, in tunnels, as well as when the work is to be performed in a restricted space where it is hard to use an open-loop breathing apparatus with large heavy bottles.

The respiratory protective equipment simulator (application WO No. 2008/089407 A1, IPC A62B 9/00, published in 2008) intended for familiarizing miners and other mine workers with the sensations experienced when using a compressed-oxygen SCSR **(self-contained self-rescuer)** is known. The respiratory protective equipment simulator consists of a facepiece in the form of a mouthpiece and a nose clip, to which two removable canisters filled with a reaction material and fitted with filters for collecting harmful dust, valves and holes connecting to the atmosphere are attached. Both the mouthpiece and the nose clip are of the type used in SCSR. When a user breathes with the respiratory protective equipment simulator, the heat generation is simulated due to the chemical reaction of the material provided in the canisters and user's exhalation products, the breathing resistance is determined by the breathing apparatus design and nature of the chemical compound. The user gets to know the breathing conditions with the real compressed-oxygen SCSR. The disadvantage of this device is the infeasibility of such functions as recording, calculation and display of trainee's data that affect the effective protection time of a respiratory protective equipment. This simulator does not allow ensuring that the trainee does not remove the simulator during a training procedure and displaying the training process and trainee's connection to the simulator on a wearable device and, for example, on the operator's computer. It does not have a replaceable disinfection-free module.

A multi-purpose simulator that simulates human behavior in a respiratory protective equipment (patent No. RU 2597574 C2, published on 10.09.2016, bulletin No. 25) and is intended for learning to use breathing apparatuses. A core of the multi-purpose simulator is a respiratory protective equipment simulator, in which the breathing resistance, volume fraction of carbon dioxide and breathing mixture temperature increase due to heating of the breathing mixture, cross-section change and redistribution of gas flows controlled with the automation system according to certain patterns. Additionally, the multi-purpose simulator is equipped with subsystems for calculating and modeling breathing mixture parameters, assessing the trainee's condition and pneumotachograms generated by the trainee, calculating physical loads and visualizing the space. The disadvantage of this simulator is the lack of replaceable elements to allow re-use by other trainees Another disadvantage is the lack of displayed information about the expended operating time of the respiratory protective equipment simulator.

A simulator that creates breathing conditions similar to those in a respiratory protective equipment (patent RU 214159 U1, published 13.10.2022, bulletin No. 29) and is intended for learning the rules of using a respiratory protective equipment and to acquire breathing skills with them. In its basic version, the simulator creating breathing conditions similar to those in a respiratory protective equipment comprises a unit simulating the inspiration CO₂ concentration, which is connected to a nozzle for resistance simulation and is equipped with a check valve for exhalation, a flow meter and a measurement unit, including a microcontroller that collects and transmits the data received from the flow meter sensor, with an option to record data via a radio-wave transmitter; a power unit, a data transmission unit, and a data synchronization unit are enclosed in a housing simulating a regenerative canister, an absorbent chamber, or a bottle, depending on the type of a respiratory protective equipment. A user connects to the device through a facepiece. A facepiece of a respiratory protective equipment may have various options: a mask, a full-face mask, a half-face mask, a quarter-face mask, a mouthpiece with a nose clip, a hood, a helmet. The disadvantage of this device is the lack of feedback from the respiratory protective equipment simulator to a trainee, and of a function for calculating and displaying the remaining effective protection time. For this reason, a trainee cannot adjust his or her behavior to optimally use the remaining operating time of a respiratory protective equipment. It does not have a replaceable disinfection-free module.

The closest analogue is the invention (patent RU 2813903), which is an assembly of devices for training breathing with a respiratory protective equipment using chemically bound oxygen or compressed oxygen (hereinafter referred to as RPE) that comprises a device looking identically to the respiratory protective equipment that consists of a facepiece, air hoses, a breathing bag with a pressure relief valve, a support harness and comprises a housing simulator, a CO2 concentration simulating unit, a nozzle for resistance simulation, an inspiration check valve, an exhalation check valve, a flowmeter, a ballast weight, an on/off switch, a measurement unit including a microcontroller that collects, calculates and transmits data received from the flowmeter sensor, with an option to record data via a radio-wave transmitter, a power unit, a data transmission unit, a data synchronization unit, a heart-rate monitor having such distinctive feature as an inertial sensor, a data presenting unit that includes a screen and a speaker or a vibration unit with a controller or glasses with lenses where the information intended for a trainee is projected and receives information from the measurement unit's microcontroller, and a unit communicating with a personal computer with an option to display the training process and generate training protocols. The disadvantage of this system is the lack of breathing mixture heating to allow breathing simulation in RPE. Also this system does not contain a replaceable facepiece and a breathing bag of a simulator to avoid the need of disinfecting the areas where the trainee's breathing flow passes.

The air inhaled by a trainees has to be heated in order to create the closest possible breathing conditions in RPE. When breathing with a closed-loop respiratory protective equipment, heat is released due to chemical reactions, and therefore the inhaled air temperature is higher. This adds to the physiological load a worker is exposed to.

A problem that the present invention of the system solves is creating a RPE simulator that simulates a higher temperature of the inhaled breathing mixture, which is close to the temperature of the inhaled breathing gas in RPE, and also has replaceable elements through which a trainee inhales and exhales in the form of a single unit.
Adding a breathing mixture heating option to the known simulator (patent RU 2813903 C1, published on 19.02.2024, bulletin No. 5) allows simulating the temperature when breathing in RPE, while the replaceable facepiece, breathing bag, heating element and flow sensor housing will allow avoiding the need to disinfect the simulator before it is used by the next trainee.

The technical problem the present invention solves is the expansion of the range of technical means for training breathing skills in closed-loop respiratory protective equipment that allows a trainee to feel the heated inhaled air, breathing resistance, increased concentration of CO2, and also to monitor the training process and the estimated consumption of the operating time.

### Disclosure of invention

The present invention is an assembly of devices including a support harness, a simulator looking identically to the RPE consisting of a facepiece, a breathing bag with breathing bag pipes, a thermoelement, a flow sensor housing, a flowmeter, a nozzle for resistance simulation, a filter, a simulating operating part that comprises a flowmeter converter, an inertial sensor, a ballast weight, an on/off switch, a power unit, a measurement unit including a microcontroller that controls, collects, calculates and transmits data, a flowmeter, a thermoelement, a heart rate monitor, an inertial sensor with an option to transmit processed data via a radio-wave transmitter, a data synchronization unit, a wireless data transmission unit, and a wearable device including a microcontroller with a heart rate monitor, a wireless transmission unit, a synchronization unit, a display and a power component, with an option to display the training process and remaining operating time and to generate training protocols.

Whereas:
- The facepiece, breathing bag comprising the nozzle, thermoelement, and the flow sensor housing are connected as a single unit, which is attached to the filter using a quick-release technique to allow replacement with a new replaceable unit of the facepiece with the breathing bag and filter.
- The thermoelement placed in the breathing bag is connected to the simulating operating part by means of mating terminal connections mounted on the flow sensor housing and simulating operating part.

This invention may be implemented as a version where the flowmeter is designed as a Venturi tube, with nozzles on flowmeter housing 5 for pressure measurement and proper holes of the simulating operating part for pressure measurement with the flowmeter and flowmeter converter located in the simulating operating part.

The simulating operating part may be additionally equipped with the data presenting unit that includes a screen and/or a speaker or a vibration unit with a controller to display signals corresponding to the symbols of the remaining operating time of RPE and the amount remaining till the end of the estimated operating time of RPE and/or vibration-emitting unit. The data presenting unit may be a supplementing unit to this system connected to the simulating operating part or be located on the simulating operating part.

In its visual presentation the system comprises:
- support harness;
- simulator consisting of a facepiece, a breathing bag, and a simulating operating part;
- wearable device;
- data presenting unit.

The breathing bag comprises a nozzle, a breathing bag pipe and a thermoelement.

The simulating operating part comprises a flowmeter converter, an inertial sensor, a ballast weight, an on/off switch, a power unit, a measurement unit including a data synchronization unit, a wireless data transmission unit, a microcontroller that controls, collects, calculates and transmits data from the flowmeter, thermoelement, heart rate monitor, inertial sensor, with an option to transmit processed data via a radio-wave transmitter. When the flow sensor housing is designed as a Venturi tube, the flowmeter is enclosed in the simulating operating part as well.

The RPE facepiece may have various options: a full-face mask, a half-face mask, a quarter-face mask, a mouthpiece with a nose clip, a hood. A trainee connects to the simulator though a facepiece. A training process may require to pass various routes and accomplish various tasks, including a route in a mine.

When a trainee inhales, the gas mixture passes through a filter, a flowmeter, a breathing bag pipe where it is heated by a thermoelement and mixed with residual the CO₂ from the previous exhalation, a nozzle that simulates the resistance identical to the one in RPE, and a facepiece. When a trainee passes a route, the measurement unit receives information: from the inertial sensor about the path made by the trainee, from the flowmeter - through the converter - about the trainee's breathing rate to calculate the remaining operating time of RPE, about the heart rate by means of the wireless data transmission unit and displayed via the units on the wearable device and/or through the reporting unit.

The remaining operating time of PBA is calculated from the amount of the operating time provided by the RPE manufacturer. The remaining operating time of RPE is determined by an algorithm based on the RPE manufacturer's data or test results obtained for a breathing simulator (for example, patent RU 86698) and specifying the volume of the emitted gas mixture calculated based on the rated mass of the chemical in the regenerative canister or oxygen volume in the bottle.

The operating time of RPE is calculated considering the non-linear dependence of the flowrate and ventilation rate.

The maximum rated volume of the breathing mixture is assumed and calculated based on the operating conditions of RPE under a moderate load (35 dm³/min. with the lung machine), which is described in the regulatory documents

Taking BS EN 13794:2002 as an example, given the rated operating time of RPE with chemical oxygen is 60 minutes, the operating time of RPE under a load of relative rest increases at least 3 times more than the rated value, and under a heavy load it decreases 3 times less, thus the operating time in the relative rest condition will be 300% of 60 minutes, i.e. 180 minutes (minimum); under a moderate load it will be 100% of 60 minutes, i.e. 60 minutes; and under a heavy load - 30% of 60 minutes, i.e. 18 minutes.

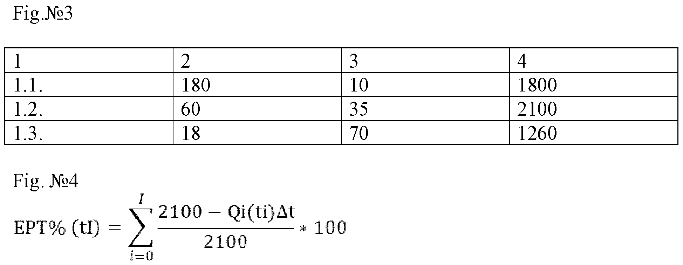

Knowing the operating time and ventilation rate under each load, one may calculate the rated design operating time of a self-rescuer for various loads (Fig. 3).
For relative rest conditions it will be 1800 dm³;
For moderate load conditions - 2100 dm³;
For heavy load conditions - 1260 dm³.

A curve of the RPE operating time vs. load is made based on the said points. This dependence is not linear, which makes it difficult to determine the remaining operating time of the self-rescuer in case of mixed (real) breathing.

To determine the remaining operating time of RPE at any specific time, regardless of the operating mode, the obtained value of the volumetric flow rate is adjusted to the same level as the rated limit value by multiplying it by a weighting factor that considers the nonlinearity of operating time of RPE in different modes.

The remaining operating time of RPE is recorded and calculated by using a digital computing device as a measurement unit, for example, by using programmable logic controllers that run a measurement and calculation algorithm implemented by the measuring unit.

Readings of transmitters are taken by the microcontroller at a fixed rate.

The ensured ventilation rate can be determined based on a moving average of several, for example three or four, last values calculated.

The remaining operating time is calculated each second by the formula shown in Fig. 3.

In the formula in Fig. 4 for calculating the remaining operating time based on the full volume of the self-rescuer, the rated design operating time is equal to 2100 dm³.

Reporting on the consumption of the RPE operating time means informing a trainee on the analyzed data on the currently consumed and/or remaining RPE operating time at the trainee's current ventilation rate, as well as data on the rest distance, based on the remaining RPE operating time.

The data on the consumption of the RPE operating time are presented by using the data processed by the measurement unit and transmitting the obtained data to the data presenting unit and/or wearable device.

The data on the remaining operating time of RPE can be presented in various ways, for example, by visualization, initiation of an audio or light signal, vibration and others.

Also, the simulator system can be equipped with a personal computer for the operator to monitor the training process and obtain results of completed training sessions.

This description uses the following definitions:
Connection to the simulator is the start of simulator operation in response to the trainee's breathing.
EPT - effective protection time of RPE specified by the RPE manufacturer.
GAM - gas-air mixture

A trainee is a person (an individual) mastering the technique of breathing training in a personal breathing apparatus.

Skills drilling is a process of acquiring practical skills by a trainee.

Ventilation rate is the volume of one inhalation (exhalation) or breathing capacity (pp. 5 of the 2nd edition, updated and revised, "Regenerative canisters for mine rescue operations" by N.S. Didenko, Moscow "NEDRA" 1990).

SCSR - self-contained self-rescuer.

RPE -respiratory protective equipment, SCSR, such as a self-rescuer with chemically bound oxygen or an independent respiratory device using compressed oxygen and liquefied oxygen.

Training is a series of trainee's actions aimed at consolidating and improving the skills of using respiratory protective equipment for the trainee to be able to use RPE during a longer operating time.

A simulator is an assembly of devices that simulate personal breathing apparatuses and record the ventilation rate, steps taken and heart rate and allow implementing the provided technique of breathing training in personal breathing apparatuses.

Light load is simulation of breathing rate of 10 dm³/min.

Moderate load is simulation of breathing rate of 35 dm³/min.

Heavy load is simulation of breathing rate of 70 dm³/min.

### Brief description of drawings.

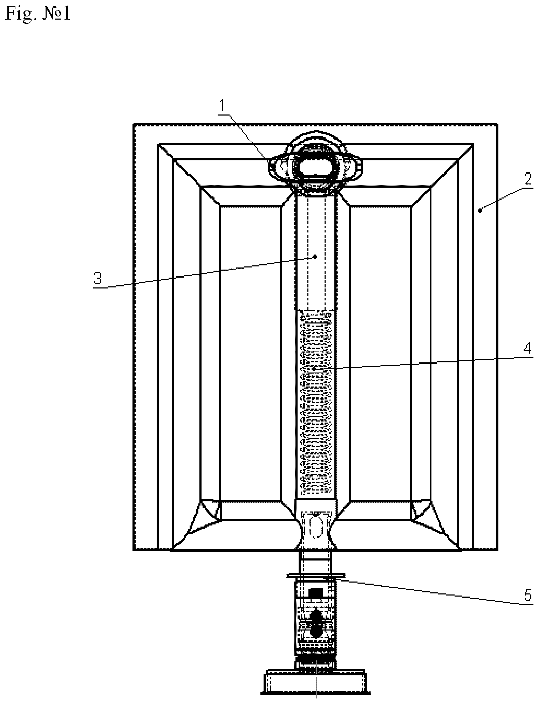

Fig. 1 shows a schematic diagram of one of the versions of the simulator's replaceable part: general view of a mouthpiece and a breathing bag of the simulator, where 1 is the mouthpiece; 2 is the breathing bag; 3 is the breathing bag pipe; 4 is the thermoelement; 5 is the flow sensor housing.

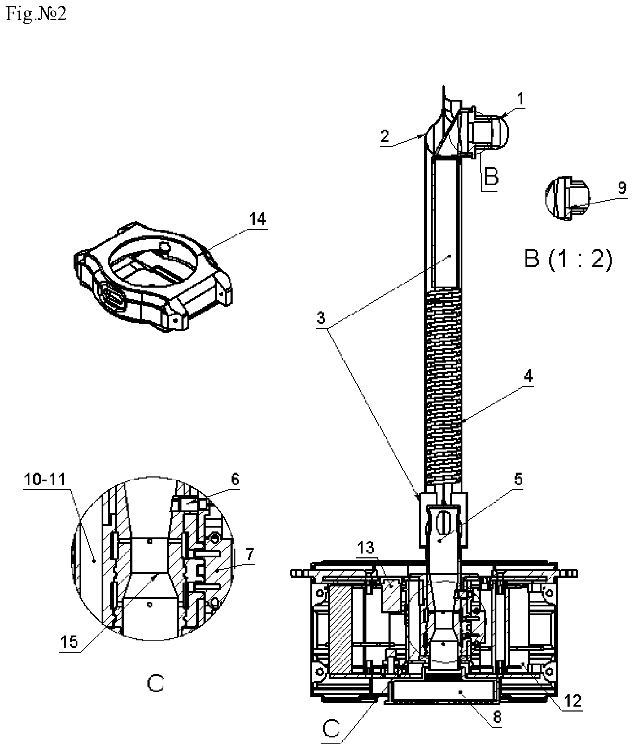

Fig. 2 shows a general diagram of the simulating operating part and replaceable component (section), where 5 - flow sensor housing, 6 - thermoelement terminals; 7 - flowmeter converter; 8 - filter; 9 - nozzle; 10 - microcontroller; 11 - inertial sensor; 12 - power unit; 13 - on/off switch, 14 - wearable device, 15 - Venturi tube.
Fig. 3 shows the calculations of the rated operating time of the self-rescuer, where column 1 - the load condition description, column 2 - operating time of the self-rescuer in minutes (min), column 3 - ventilation rate in cubic decimeters per minute (dm³/min.), column 4 - rated estimated operating time of the self-rescuer in cubic decimeters (dm³).
Figure 4 shows an example formula for determining the residual operating time of RPE where:
   EPT% (t_{I}) - remaining effective protection time of self-rescuer's RPE in percents;
   Qᵢ(tᵢ)- trainee's ventilation rate, dm³/min. in tᵢ.
   tiᵢ - time moment.

### Embodiment.

The simulator (an assembly of devices) operates as follows:
The simulator is placed on the trainee's body using a support harness. The trainee puts on facepiece (a mouthpiece will be used herein) 1 and turns the device on by pressing on-off switch 13 located on the simulating operating part of RPE. After the first inhalation through the facepiece the simulator begins calculating the remaining operating time of the RPE simulator.

After being inhaled the gas mixture enters from the atmosphere through filter 8 into flowmeter housing 5, flowmeter and via breathing bag pipe 3, where it mixes with the formed CO₂ after being exhaled, nozzle 9 creating the resistance identical to that of RPE, to the facepiece of RPE (mouthpiece 1). Microcontroller 10 of the measurement unit calculates the volume of air inhaled, calculates the distance traveled, and records this information with an option of transmitting it further. Additionally, microcontroller 10 monitors the performance of thermoelement 4.

When a trainee exhales, the resulting GAM passes through the RPE facepiece (mouthpiece 1), nozzle 9 creating the resistance identical to that of RPE, breathing bag pipe 3, leaving a certain amount of CO₂, which is the concentration of CO₂ entering the next breathing phase upon inhalation, flowmeter, filter 8, and goes into the atmosphere. The inspiration CO₂ concentration when working in the simulator is identical to that received when working in real RPE.

The flowmeter is a flowrate sensor with a primary converter that transmits an electrical signal to flow meter converter 7. The flowmeter can be designed as an impeller enclosed inside flowmeter housing 5, with a microprocessor that converts a pulse from the sensor and transmits an electrical signal to flowmeter converter 5.

Also, the flowmeter can be designed as Venturi tube 15 with nozzles on flowmeter housing 5 for pressure measurement and proper holes of the simulating operating part for pressure measurement with the flowmeter and flowmeter converter located in the simulating operating part.

When the flowmeter is designed as a Venturi tube, upon inhalation and exhalation the GAM flow passes through filter 8, Venturi tube 15 mounted in flow sensor housing 5, breathing bag pipe 3, nozzle 9, to the facepiece and back.

Thermoelement 4 can be designed as a heating cable.

Microcontroller 10 of the measuring unit is a computing unit, for example ESP32, that collects, saves and processes the input data received from the flowmeter, inertial sensor 11, thermoelement 4, compatible sensors and units, including the heart rate monitor of the wearable device, and calculates and transmits the data to wearable device 11 (for example, a smartphone or smart watch) and/or a data presenting unit, as well as other devices (for example, a computing device (a computer or another device)). The information received from flowmeter converter 7, inertial sensor 11, thermoelement 4 is converted into a digital code. Microcontroller 10 controls thermoelement 4 to maintain the required temperature.

The estimated operating time of RPE is determined based on tests of this type of RPE using the lung machine in various modes to build a curve of the RPE operating time vs. ventilation rate.

By means of the built-in wireless data transmission sensor, microcontroller 10 of the measurement unit receives the data on the estimated operating time of the RPE model from the connected personal computer. The data received and processed by microcontroller 10 during or after the training session can be transmitted to, including, but not limited to, a smartphone, a smart watch, a computing device (a computer or another device) be displayed, analyzed and processed in any form.

Power supply to microcontroller 10, flowmeter converter 7, flowmeter, thermoelement 4, through the terminals of thermoelement 6, inertial sensor 11, data synchronization unit, data presenting unit and wireless data transmission unit of the measuring unit is provided by power unit 12, which is switched on and off with on/off switch 13 found on the simulating operating part.

The simulating operating part of the simulator is equipped with ballast (ballast weight), which, in turn, will simulate the weight of the identical RPE.

Along the inhalation/exhalation line, the RPE facepiece (any version) is connected to breathing bag 2, flow sensor housing 5, filter 8 with an air-tight joint, thus making a single unit which is easily mounted to the simulator body - a replaceable component. This unit is not reusable to ensure the user's personal hygiene.

The replaceable component ensures isolation of the simulating operating part from the breathing mixture and is quickly removable. Quick removal is ensured by a detachable connection between flow sensor housing 5 and filter 8, for example a threaded, splined or conical connection.

Nozzle 9 creates the resistance simulation of an identical RPE by calibrating the cross-section of the through passage.

Filter 8 is designed to prevent small particles, including dust, from entering the replaceable component and to the trainee's gas-air mixture. For example, HEPA filter can be used.

The RPE body simulating unit comprises inertial sensor 11, ballast weight, on/off switch 13, power unit 12, measurement unit including microcontroller 10 that controls, collects, calculates and transmits data, flowmeter through flowmeter converter 7, thermoelement 4, through the terminals of thermoelement 6, inertial sensor 11, with an option of transmitting processed data via a radio-wave transmitter and a data synchronization unit.

The measurement unit comprises microcontroller 10, a wireless data transmission unit, a power unit, and a data synchronization unit.

Wearable device 14 is a microcontroller, for example ESP32, with a heart rate monitor, a wireless transmission unit, a synchronization unit, a display, and a power unit. The data received from the measuring unit are reflected on the display of wearable device 14. The heart rate monitor measures a trainee's heart rate during training, transmits the data to the microcontroller, the microcontroller, in turn, receives, stores and transmits the received data via the wireless transmission unit to microcontroller 10 of the measurement unit. Power to the microcontroller, heart rate monitor, wireless transmission unit, synchronization unit and display is supplied by a power source, such as a rechargeable battery.

The data presenting unit can be designed in various ways, for example, as a housing with a display showing the consumed operating time of RPE and time to go at the current ventilation rate, and/or as a unit emitting relevant audio signals, and/or a unit producing light signals corresponding to the symbols of the RPE remaining operating time and time to go until expiry of the estimated operating time of RPE, and/or a unit emitting vibrations.

The data presenting unit can be designed as an integral part of the simulating operating part of the simulator, as well as a unit enclosed in a stand-alone housing connected to the measurement unit.

The data presenting unit can be designed as a display with a microcontroller and a speaker.

The data presenting unit can be added with a vibration emitting unit, and can be designed as a vibration block with a microcontroller.

The vibration unit can be designed, for example, according to patent RU 2 684 484 C1, where the system monitors critical events occurring in the passenger compartment of a vehicle and takes appropriate decisions in real time, for example, by notifying a vehicle driver with an audio signal, voice message, light signal, vibration signal or a combination thereof.

During the training session, microcontroller 10 receives and processes signals received from sensors, including but not limited to the flowmeter, inertial sensor 11 and other sensors capable of receiving information from the measurement unit, and calculates the ventilation rate produced, on the basis of which it calculates the RPE operating time and rest path, and transmits information to mobile device 14 and/or the data presenting unit, as well as via the wireless data transmission unit, which is equipped with a special module for data reception and transmission. In case of radio communication loss, the microcontroller is equipped with an electronic memory buffer capable of saving the data of off-line operation.

The wireless data transmission unit of the measurement unit can be designed as, for example: WLAN/Wi-Fi module, Bluetooth module, BLE module, NFC module, IrDa, RFID module, etc. The wireless data transmission unit, which can be functionally interfaced with the corresponding devices of the simulator and, for example, among others, with a computer, a smartphone, a smart watch, manages the data exchange via a wireless data transmission channel such as WAN, PAN, LAN, WLAN, WMAN.

Based on the received and processed data, microcontroller 10 generates and transmits data via the wireless data transmission unit to wearable device 14 or data presenting unit, as well as to the interfaced devices, such as, among others, a personal computer with installed software where received data can be analyzed and received data can be saved and transmitted further.

The support harness is a system for fastening and securing RPE on a trainee and consists of belts and straps.

Thus, the above described assembly of devices proves to be able to be used for training breathing skills in closed-loop self-contained personal breathing apparatus that allows a trainee to feel the heated air, resistance, CO2, and also to monitor the training process and the consumption of the estimated operating time.

## Claims

1. An assembly of devices for training breathing techniques with closed-loop respiratory protective equipment is a system that comprises a support harness, a simulator looking identically to RPE and consisting of a facepiece, a breathing bag including a nozzle for resistance simulation, a breathing bag pipe, a thermoelement, a flowmeter, a filter, a simulating housing comprising an inertial sensor, a ballast weight, an on/off switch, a power unit, a measurement unit comprising a microcontroller that controls, collects, calculates and transmits data, a flowmeter, a thermoelement, a heart rate monitor, an inertial sensor, with an option of transmitting processed data via a radio-wave transmitter, a data synchronization unit, a wireless data transmission unit, a ballast weight and a wearable device comprising a microcontroller with a heart rate monitor, a wireless transmission unit, a synchronization unit, a display and a power component with an option of displaying the training process and remaining operating time and generating training protocols, wherein:
- the thermoelement is placed in the breathing bag and heats the breathing mixture;
- the facepiece, breathing bag comprising the breathing bag pipe, thermoelement, and the flowmeter are connected as a single unit, which is attached to the filter using a quick-release technique to allow replacement with a new replaceable unit of the facepiece with the breathing bag and filter;
- the flowmeter is a flow sensor housing designed as a Venturi tube, with fittings that match the holes in the simulating body and are intended for measuring the pressure differential by the flowmeter converter located in the simulating body;
- the thermoelement placed in the breathing bag is connected to the simulating body by means of mating terminal connections mounted on the replaceable unit and simulating body.

2. An assembly of devices as per item 1 where the flowmeter is designed as a flow sensor housing with an impeller and a flowmeter converter located in a simulating body .

3. An assembly of devices as per item 1 or 2 where the simulating body is additionally equipped with a data presenting unit comprising a screen and a speaker

4. An assembly of devices as per item 1, 2 or 3 where the simulating body is additionally equipped with a data presenting unit comprising a vibration unit with a controller.
